# EUROPÄISCHE PATENTANMELDUNG

(11) **EP 1 886 860 A1**
(43) Veröffentlichungstag der Anmeldung: **13.02.2008**
(21) Anmeldenummer: 07014250.0
(22) Anmeldetag: 20.07.2007
(51) Int. Cl.: B60K 6/387

(54) **Antriebsstrang, insbesondere Antriebsstrang für ein Fahrzeug**

(30) Priorität: 02.08.2006 DE 102006036044; 04.07.2007 DE 102007031109
(71) Anmelder: ZF Friedrichshafen AG, 88038 Friedrichshafen (DE)
(72) Erfinder: Bartha, Alexander, 97082 Würzburg (DE); Matschas, Steffen, 97469 Gochsheim (DE)

(57) **Zusammenfassung**

Die Erfindung betrifft einen Antriebsstrang (1), insbesondere einen Antriebsstrang für ein Fahrzeug, der einen Antriebsmotor (2), eine Kupplungsvorrichtung (3), eine elektrische Maschine (4) und ein Anfahrelement (5) aufweist, wobei die Kupplungsvorrichtung (3) eine Kupplungsscheibe (6) aufweist, die mittels eines Federmittels (7) zwischen einem Schwungrad (8) und einer Anpressplatte (9) einspannbar ist, sowie ein Betätigungsmittel (10), mit dem ein auf die Anpressplatte (9) wirkender Wirkabschnitt (11) des Federmittels (7) axial beweglich ist, und wobei die Anpressplatte (9) zumindest teilweise von einem Druckplattengehäuse (12) umgeben ist. Um die Welle des Antriebsmotors beim Betätigen des Betätigungsmittels frei von Axialkräften zu halten, ist erfindungsgemäß vorgesehen, dass zwischen dem Druckplattengehäuse (12) und dem Betätigungsmittel (10) ein erstes Lager (13) angeordnet ist.

## Beschreibung

Die Erfindung betrifft einen Antriebsstrang, insbesondere einen Antriebsstrang für ein Fahrzeug, der einen Antriebsmotor, eine Kupplungsvorrichtung, eine elektrische Maschine und ein Anfahrelement aufweist, wobei die Kupplungsvorrichtung eine Kupplungsscheibe aufweist, die mittels eines Federmittels zwischen einem Schwungrad und einer Anpressplatte einspannbar ist, sowie ein Betätigungsmittel, mit dem ein auf die Anpressplatte wirkender Wirkabschnitt des Federmittels axial beweglich ist, und wobei die Anpressplatte zumindest teilweise von einem Druckplattengehäuse umgeben ist.

Ein gattungsgemäßer Antriebsstrang ist aus der DE 199 54 325 A1 bekannt. Dort weist der Antriebsstrang eine elektrische Maschine auf, die als Starter für einen Verbrennungsmotor eingesetzt wird. Das vom Verbrennungsmotor erzeugte Drehmoment wird über eine Kupplungsvorrichtung zu einem Anfahrelement übertragen, das als hydraulischer Drehmomentwandler ausgeführt ist.

Damit die Kupplungsvorrichtung geschaltet werden kann, weist sie in an sich bekannter Weise eine Kupplungsscheibe auf, die zwischen einer Anpressplatte und einer Schwungscheibe angeordnet ist, wobei die Schwungscheibe mit der Kurbelwelle des Verbrennungsmotors verbunden ist.

Die Anpressplatte wird dabei von einer Feder (Federmittel) und insbesondere von einem Wirkabschnitt derselben axial beaufschlagt, so dass ein Reibmoment über die Kupplungsvorrichtung übertragen werden kann. Zur axialen Bewegung der Feder bzw. deren Wirkabschnitt ist ein mechanisch oder hydraulisch arbeitender Aktuator (Betätigungsmittel) vorgesehen. Der Aktuator ist bei der vorbekannten Lösung so ausgeführt, dass sich ein Ausrücker an einem Statorträger der elektrischen Maschine abstützt und eine axiale Kraft auf die Feder aufgibt. Hierdurch wird die Kupplung gelüftet.

Insbesondere im Falle dessen, dass als elektrische Maschine ein elektrischer Antriebsmotor zum Einsatz kommt, der Bestandteil eines Hybridantriebs (Kombination eines Verbrennungsmotors und eines elektrischen Motors für den Antrieb von Kraftfahrzeugen) ist, hat sich die vorbekannte Lösung als nachteilig erwiesen. Wird von dem Betätigungsmittel eine Axialkraft erzeugt, die zur Lüftung der Kupplung erforderlich ist, wirkt diese Axialkraft unmittelbar auf die Kurbelwelle des Verbrennungsmotors. Hierbei entsteht eine höhere Reibleistung in den Lagern der Kurbelwelle. Dies ist deshalb bei der genannten Anwendung bei Hybridantrieben besonders störend, weil es bei diesem Anwendungsfall zu einer größeren Anzahl an Startvorgängen kommt (die elektrische Maschine wird in der Regel auch zum Anlassen des Verbrennungsmotors eingesetzt).

Der Erfindung liegt daher die **Aufgabe** zugrunde, einen Antriebsstrang der eingangs genannten Art so weiterzubilden, dass der genannte Nachteil abgestellt wird. Es soll also sichergestellt werden, dass insbesondere bei einer kombinierten Anwendung eines Verbrennungsmotors mit einem elektrischen Motor (Hybridantrieb) die Belastung der Kurbelwelle geringer ist und namentlich Axialkraftbelastungen beim Schalten der Kupplungsvorrichtung vermieden werden.

Die **Lösung** dieser Aufgabe durch die Erfindung ist dadurch gekennzeichnet, dass zwischen dem Druckplattengehäuse und dem Betätigungsmittel ein erstes Lager angeordnet ist.

Diese Bauform hat den Vorteil, dass ein günstigerer Kraftfluss beim Betätigen des Betätigungsmittels und bei der Beaufschlagung der Anpressplatte mit einer Axialkraft vorliegt. Der Kraftfluss ist im Gehäuse der Vorrichtung geschlossen. Dadurch werden angrenzende Lager und namentlich diejenigen der Kurbelwelle beim Betätigen des Aktuators nicht belastet.

Bevorzugt kann das erste Lager sowohl radiale als auch axiale Kräfte übertragen. Ferner kommt als erstes Lager bevorzugt ein Kugel- oder Wälzlager zum Einsatz. Als spezielle Bauform hat sich das Rillenkugellager bewährt.

Wie bereits erwähnt, ist der Erfindungsvorschlag besonders geeignet für Hybridantriebe von Kraftfahrzeugen. Demgemäß ist der Antriebsmotor vorzugsweise eine Brennkraftmaschine und die elektrische Maschine ein elektrischer Antriebsmotor. Das Anfahrelement ist dann ein Getriebe beliebiger Bauart (Schaltgetriebe oder automatisches Getriebe).

Das Betätigungsmittel ist bevorzugt als hydraulischer Aktuator ausgebildet. In diesem Falle ist mit Vorteil vorgesehen, dass das Betätigungsmittel einen axial beweglichen Ringkolben aufweist, der in einem ringförmigen Aufnahmeraum eines Zylinders angeordnet ist, wobei der Ringkolben und der Zylinder konzentrisch zur Achse des Antriebsstrangs angeordnet sind.

Bevorzugt ist weiter vorgesehen, dass die Kupplungsscheibe mit einem Torsionsfederdämpfer versehen ist.

Die elektrische Maschine kann einen der Kupplungsvorrichtung zugewandten ortsfesten Deckel aufweisen, der über ein zweites Lager eine zumindest die Kupplungsvorrichtung und die elektrische Maschine tragende Trägerwelle lagert. Im radial äußeren Bereich des Deckels kann ein Statorträger befestigt sein, an dem ein Stator der elektrischen Maschine angeordnet ist. Ferner können Befestigungsmittel vorgesehen sein, mit denen eine drehfeste Verbindung zwischen zumindest einem Teil des Betätigungsmittels, insbesondere dessen Zylinder, und dem Deckel hergestellt wird. Die Befestigungsmittel können mindestens einen Stift aufweisen, der sich in Richtung der Achse des Antriebsstranges erstreckt.

Die elektrische Maschine kann einen Rotorträger aufweisen, an dem ein Rotor angeordnet ist. Der Rotorträger kann mit der Trägerwelle mittels eines Verbindungsmittels verbunden sein; das Verbindungsmittel ist dabei vorzugsweise eine Nietverbindung.

Der Stator ist bevorzugt radial weiter als der Rotor von der Achse des Antriebsstrangs entfernt. Dabei ist insbesondere vorgesehen, dass der Stator und der Rotor konzentrisch zueinander angeordnet sind.

Die Trägerwelle kann mit einem als Loslager ausgebildeten dritten Lager in einem Abtriebsteil des Antriebsmotors, insbesondere in der Kurbelwelle der Brennkraftmaschine, gelagert sein. Entsprechend kann vorgesehen werden, dass ein das Anfahrelement lagerndes Wellenteil mit einem als Loslager ausgebildeten vierten Lager gelagert ist. Das dritte Lager und/oder das vierte Lager sind vorzugsweise als Nadellager ausgebildet.

Das Anfahrelement kann ein der elektrischen Maschine zugewandtes Gehäuseteil aufweisen, das mit dem Rotorträger über ein Verbindungsmittel drehfest verbunden ist. Das Verbindungsmittel hat dabei bevorzugt ein Verbindungsblech, das im Radialschnitt eine gebogene Form aufweist. Durch die gebogene Form wird hier gezielt eine gewisse Nachgiebigkeit des Blechs geschaffen. Das Verbindungsblech kann mit Nieten mit dem Gehäuseteil verbunden sein. Andererseits kann das Verbindungsblech mit Stehbolzen mit dem Rotorträger verbunden werden.

Mit dem Erfindungsvorschlag wird eine Lösung für einen gattungsgemäßen Antriebsstrang geschaffen, mit der keine axialen Kräfte beim Schalten der Kupplungsvorrichtung auf andere Bestandteile des Antriebsstrangs, insbesondere nicht auf die Kurbelwelle des Verbrennungsmotors, übertragen werden.

Darüber hinaus ergibt sich eine günstige Lagerung des gesamten Antriebsstrangs, d. h. es kann mit relativ wenigen Lagern gearbeitet werden. Lager-Überbestimmungen werden durch die Nutzung benachbarter Komponenten vermieden.

In der Zeichnung ist ein Ausführungsbeispiel der Erfindung dargestellt. Es zeigen:
- Fig. 1: den Radialschnitt durch einen Antriebsstrang,
- Fig. 2: den Radialschnitt durch die Kupplungsvorrichtung des Antriebsstranges,
- Fig. 3: die Einzelheit "Z" gemäß Fig. 2,
- Fig. 4: eine schematische Darstellung des Betätigungselements zum Betätigen der Kupplungsvorrichtung,
- Fig. 5: eine weitere schematische Darstellung des Betätigungselements,
- Fig. 6: eine weitere schematische Darstellung des Betätigungselements,
- Fig. 7: den Radialschnitt durch den Antriebsstrang mit den vorgesehenen Lagern,
- Fig. 8: eine vergrößerte Ansicht eines Teils des Radialschnitts durch den Antriebsstrang mit Darstellung des Betätigungselements samt seiner Hydraulikleitung,
- Fig. 9: die Einzelheit "Y" gemäß Fig. 8,
- Fig. 10: eine vergrößerte Ansicht eines Teils des Radialschnitts durch den Antriebsstrang mit Darstellung des Bereichs zwischen elektrischer Maschine und Anfahrelement,
- Fig. 11: die Einzelheit "X" gemäß Fig. 10 und
- Fig. 12: eine perspektivische Darstellung eines Verbindungsmittels, das einen Rotorträger der elektrischen Maschine und ein Gehäuseteil des Anfahrelements verbindet.

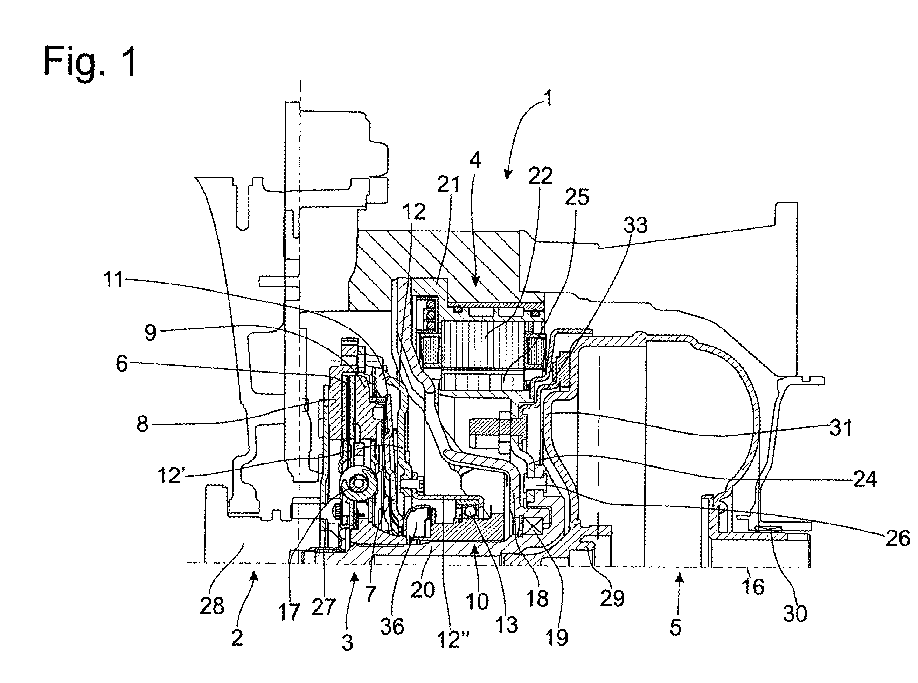

In Fig. 1 ist ein Antriebsstrang 1 zu sehen, der einen Antriebsmotor 2 in Form eines Verbrennungsmotors, eine Kupplungsvorrichtung 3, eine elektrische Maschine 4 in Form eines elektrischen Motors und schließlich ein Anfahrelement 5 in Form eines hydraulischen Drehmomentwandlers aufweist. Die Kupplungsvorrichtung 3 ist in an sich bekannter Weise aufgebaut. Sie hat eine Kupplungsscheibe 6, die zwischen einem mit dem Antriebsmotor 2 verbundenen Schwungrad 8 und einer Anpressplatte 9 angeordnet ist, wobei Federmittel 7 mit einem Wirkabschnitt 11 auf die Anpressplatte 9 drücken können, um Reibschluss zwischen den genannten Komponenten 6, 8 und 9 herzustellen. Das Ein- und Ausrücken der Kupplungsvorrichtung 3 erfolgt mittels eines Betätigungsmittels 10, auf das noch näher eingegangen wird. Die Anpressplatte 9 ist von einem Druckplattengehäuse 12 teilweise umgeben.

Erfindungswesentlich ist, dass zwischen dem Druckplattengehäuse 12 (das wie im Ausführungsbeispiel aus zwei verschraubten Teilen 12' und 12" bestehen kann) und dem Betätigungsmittel 10 ein erstes Lager 13 angeordnet ist. Dieses erste Lager 1 3 kann sowohl radiale als auch axiale Lasten übertragen.

Statt eines einteiligen Rotors 25 der elektrischen Maschine 4 wird im Ausführungsbeispiel ein zweiteiliger Rotor eingesetzt. Er besteht aus einem Rotorträger 24, der über eine Nietverbindung 26 mit einer Trägerwelle 20 verbunden ist, die sowohl die Kupplungsvorrichtung 3 als auch die elektrische Maschine 4 trägt. Diese Bauform ermöglicht eine einfache Herstellbarkeit der Teile des gesamten Rotors, wobei in vorteilhafter Weise auch verschiedene Materialien für die einzelnen Teile verwendet werden können, die sich aufgrund unterschiedlicher funktionaler Anforderungen bzw. aufgrund geforderter Designmerkmale als vorteilhaft erweisen.

Bei der Rotorwelle können sich funktionale Anforderungen aus der Aufnahme und der Weiterleitung des Drehmoments vom Verbrennungsmotor ergeben. Dies gilt auch bezüglich der Abstützung des Rotors über das Lager im Deckel und für die Abstützung bzw. Begrenzung der Auslenkungen des Gesamt-Moduls. Ferner gilt es hinsichtlich der Zentrierung des Wandlers 5.

Ein maßgebliches Designmerkmal, das einen entsprechenden Einfluss haben kann, ist z. B. eine Ausbildung eines Schmiedeteils mit Flansch zum Rotor mit einer Verzahnung zur Kupplungsscheibe.

Funktionale Anforderungen an den Rotor können sein die Aufnahme und Weiterleitung des Drehmoments vom Verbrennungsmotor und von der elektrischen Maschine sowie die Aufnahme eines Blechpakets im Bereich der Kupplungsvorrichtung.

Ein maßgebliches Designmerkmal kann hier die Ausgestaltung als Tiefziehteil oder eine Herstellung durch Drückwalzen sein.

Der Stator 22 der elektrischen Maschine 4 ist an einem Statorträger 21 angeordnet, der wiederum fest an den Deckel 18 angrenzt.

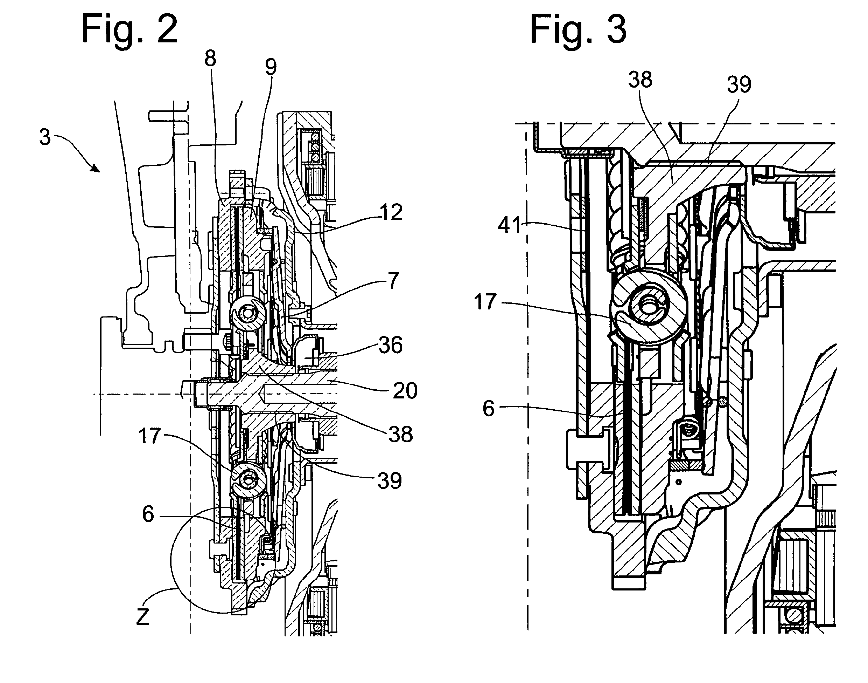

In den Figuren 2 und 3 sind Einzelheiten zum Aufbau der Kupplungsvorrichtung 3 zu sehen. Vorteilhaft ist es, wenn die Kupplungsscheibe 6 mit einem Torsionsfederdämpfer 19 versehen ist, wie er an sich als solcher bekannt ist. Ansonsten ist noch anzumerken, dass die Kupplungsscheibe über ein Fußteil 38 drehfest, aber axial verschieblich infolge eines Verschiebesitzes 39 auf der Trägerwelle 20 sitzt.

Die Kupplungsvorrichtung 3 weist u. a. das Druckplattengehäuse 12 und die Anpressplatte 9 auf, wobei ein Verschließausgleich vorgesehen werden kann. Das hier als Schwungrad 8 bezeichnete Bauteil kann auch als Gegenreibfläche angesprochen werden, die mehrteilig aufgebaut sein kann. Diese Mehrteiligkeit ergibt sich aus einem oder aus mehreren Blechen - auch Federblechen -, welche an die eigentliche Gegenreibfläche (z. B. aus GG oder GGV) vernietet sind und an den Kurbelwellenflansch geschraubt werden können. Die mehrteilige Gegenreibfläche, verbunden mit der Kurbelwelle, fixiert das Druckplattengehäuse 12 axial und damit die gesamte Kupplungsvorrichtung 3.

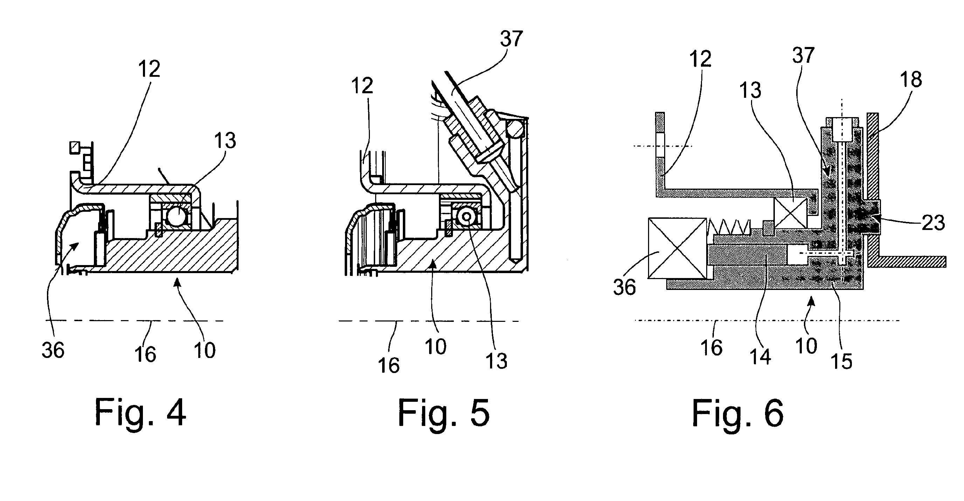

Die sich daraus ergebenden Vorteile sind ein geringer axialer Bauraumbedarf und eine Ausführungsmöglichkeit der mehrteiligen Gegenreibfläche als "taumelweich", als "taumelweich" mit radialer Abstützung des Betätigungsmittels im Deckel oder als "taumelstarr". Je nach der Notwendigkeit, die Kreiselbewegung der Kupplungsvorrichtung bei der Kurvenfahrt aufnehmen zu müssen, können die genannten Konzepte entsprechend umgesetzt werden. Vorteilhaft ist weiterhin, dass von der Kurbelwelle keinerlei Axialschwingungen über das Betätigungsmittel in die Hydraulikleitung 37 (s. Fig. 5) eingebracht werden können. Ferner kann die mehrteilige Gegenreibfläche 8 weiterhin auch einen Anlasserzahnkranz ("Not-Start" des Verbrennungsmotors bei defekter elektrischer Maschine) und einen Sensorzahnkranz zur Lage- und Drehzahlsensierung der Kurbelwelle tragen. Diverse an sich bekannte Sensoren, die bei einem Antriebsstrang eingesetzt werden, sind nicht näher dargestellt.

An der Gegenreibfläche (Schwungrad 8) können Bleche oder Blechpakete zum Einsatz kommen, die mit Nietverbindungen fixiert werden können. Die Nietköpfe können versenkt werden, um nicht zu stören. Es kann ein Unterlegblech 41 zum Schutz des Bleches bzw. des Blechpakets im Bereich der Schraubenkopfauflage der Kurbelwellenschrauben vorgesehen werden.

In den Figuren 4 bis 6 sind Einzelheiten zu dem Betätigungsmittel 10 dargestellt, das dem Aus- und Einrücken der Kupplung dient. Zu erkennen ist zunächst, dass es sich hier um ein hydraulisch betätigtes Betätigungsmittel 10 handelt; über die Hydraulikleitung 37 (s. Fig. 5) wird Hydrauliköl dem Betätigungsmittel 10 zugeführt. Das Betätigungsmittel 10 verschiebt ein Kupplungsausrücklager 36 in axiale Richtung, d. h. in Richtung der Achse 16 des Antriebsstranges 1. Das Kupplungsausrücklager 36 wiederum drückt auf das Federmittel 7 (s. Fig. 1).

Das hydraulische Betätigungsmittel 10 weist einen Zylinder 15 auf, der einen Ringraum zum Aufnahme eines Ringkolbens 14 hat. In Fig. 6 ist noch zu erkennen, wie eine Verdrehsicherung zwischen einem ortsfesten Deckel 18 der elektrischen Maschine 4 und dem Betätigungsmittel 10 hergestellt wird: An dem Betätigungselement 10 und namentlich an dem Zylinder 15 ist ein Befestigungsmittel 23 in Form eines oder mehrerer Stifte angeordnet, wobei der Stift 23 sich in Achsrichtung erstreckt. Der Stift 23 greift in eine entsprechende Ausnehmung im Deckel 18 ein, so dass eine Relativdrehung der Teile 10 und 18 um die Achse 1 6 nicht möglich ist.

Bei dem Betätigungsmittel 10 handelt es sich also um ein kupplungsinternes Ausrücksystem, das ein Öffnen und Schließen der Kupplung 3 gewährleistet, ohne dass die Kurbelwelle des Motors 2 mit einer Axialkraft beaufschlagt wird. Dies hat den Vorteil, dass beim Start des Verbrennungsmotors die relativ hohe Ausrückkraft nicht auf die Kurbelwelle wirken kann. Die Kurbelwellenlager werden dadurch nicht zusätzlich belastet, es tritt keine zusätzliche Reibleistung in den Kurbelwellenaxiallagern auf. Durch die wesentlich höhere Anzahl von Motorstartvorgängen eines Verbrennungsmotors mit nachgeschalteter elektromotorischer Antriebseinheit - im Verhältnis zu herkömmlichen Antriebssträngen - ist der Effekt der axialkraftfreien Kurbelwelle ohne zusätzliche Reibleistung in den Kurbelwellen-Axiallagern nicht zu vernachlässigen.

Die Anbindung zum Deckel 18 mittels der Befestigungsmittel 23 hat folgende Vorteile: Das Betätigungsmittel kann bei der Montage montagegerecht in der richtigen Position gehalten werden. Das Betätigungsmittel und insbesondere der Kolbenraum mit seinem Hydraulikanschluss werden gegen Verdrehen gesichert.

Je nach der Ausführung der mehrteiligen Gegenreibfläche (Schwungrad 8) wird eine radiale Abstützung sichergestellt, um die Kreiselbewegung der Kupplungsscheibe 6 bei der Kurvenfahrt des Fahrzeugs zu begrenzen (radiale Auslenkung der Kupplungsscheibe).

Neben der in Fig. 6 dargestellten Verbindung mittels Stiften 23 ist es genauso denkbar, dass eine andere formschlüssige Verbindung zwischen dem Gehäuse des Betätigungsmittels 10 und dem Deckel 18 vorgesehen wird.

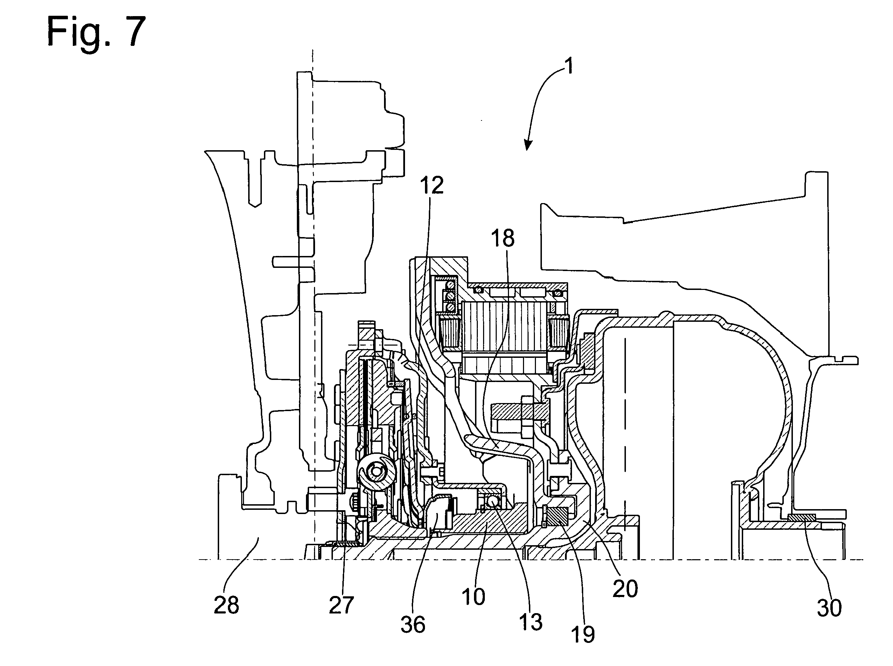

In Fig. 7 ist dargestellt, wie die Lagerung des Antriebsstranges 1 erfolgt. Insgesamt sind fünf Lagerungen vorgesehen, um die verschiedenen Komponenten zu lagern. Das erste Lager 13 überträgt sowohl radiale als auch axiale Kräfte zwischen dem Druckplattengehäuse 12 und dem Betätigungsmittel 10. Das zweite Lager 19 überträgt ebenfalls sowohl radiale als auch axiale Kräfte, und zwar zwischen dem ortsfesten Deckel 18 der elektrischen Maschine 4 und der Trägerwelle 20.

Das Ausrücklager 36 überträgt im wesentlichen nur die axial gerichteten Kräfte des Betätigungselements 10 beim Ausrücken der Kupplungsvorrichtung 3.

Die beiden Lager 27 und 30 (drittes und viertes Lager) sind als reine Radiallager, also als Loslager, ausgeführt, wobei bevorzugt Nadellager zum Einsatz kommen. Mit dem Lager 30 wird ein Wellenteil 29 gelagert, das Bestandteil des Anfahrelements 5 ist. Zwischen dem Wellenteil 29 und der Trägerwelle 20 kann eine Drehkopplung vorgesehen werden.

Abgesehen vom ersten Lager 1 3 werden sowohl Radial- als auch Axialkräfte nur vom zweiten Lager 1 9 übertragen, das insofern als Festlager wirkt. Das zweite Lager 19 hat daher auch die Aufgabe, eine Festlagerstelle für die Lagerung des Anfahrelements 5, hier also des Wandlers, zu bilden. Die Lagerung des Anfahrelements besteht somit aus dem zweiten Lager 19 und dem Lager 30 zwischen der Nabe des Wandlers und dem entsprechenden Gehäuse im rechten Bereich in Fig. 7.

Um Kräfte aus Unwuchten und Auslenkungen der Kupplungsvorrichtung besser aufnehmen bzw. begrenzen zu können und die Gesamtmontage des Systems zu erleichtern, ist das zusätzliche Loslager 27 vorgesehen, das zwischen der Trägerwelle 20 und der Kurbelwelle 28 angeordnet ist. Dieses Lager 7 ist als Blechlager ausgeführt, da es keine übermäßig hohe radiale Steifigkeit haben muss.

Die dargestellte Lagerung bietet eine relativ steife Anordnung der Gesamteinheit, was dazu führt, dass Eigenschwingungen des Antriebsstranges bzw. von außen angeregte Schwingungen sich nicht stark auswirken können. Damit werden hohe radiale Auslenkungen der gelagerten Bauteile vermieden. Dies wird in vorteilhafter Weise mit einer geringen Anzahl an Lagern erreicht.

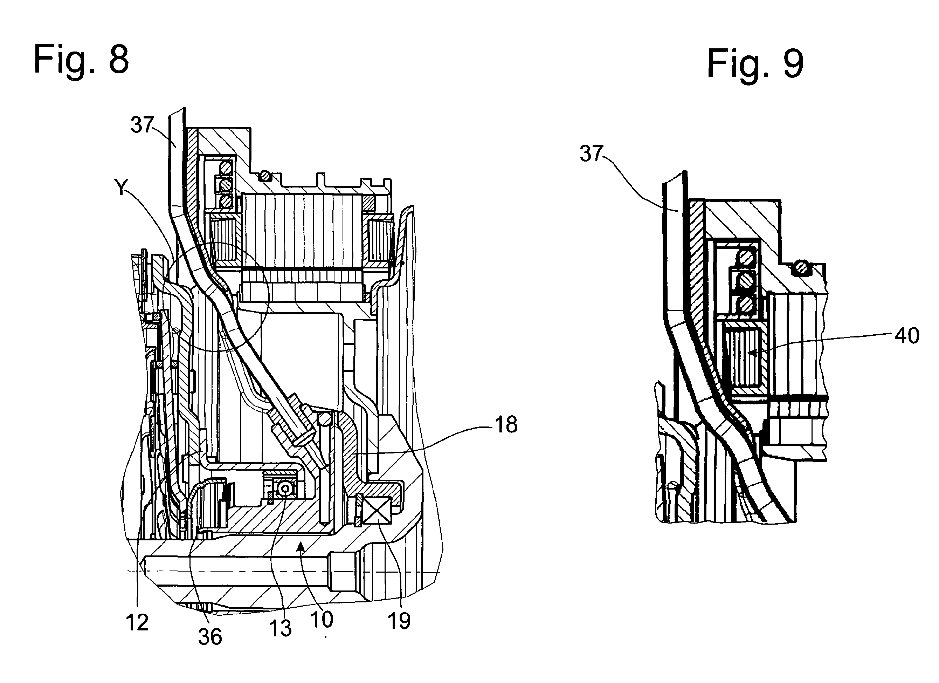

In den Figuren 8 und 9 ist die Zuführung von Hydrauliköl mittels der Hydraulikleitung 37 zum Betätigungsmittel 10 illustriert. Der Deckel 18 wird zum Schutz der Hydraulikleitung 37 so ausgeführt, dass zwischen dieser und den Wickelköpfen 40 der elektrischen Maschine 4 eine Wärmeabschirmung in Form einer gewissen Wandstärke vorhanden ist. Hintergrund ist hier, dass durch die warmen Wickelköpfe 40 Wärme abgestrahlt wird, die unter Umständen zur Zerstörung der Oberfläche der Hydraulikleitung 37 und des Drucköls führen kann. Die Hydraulikleitung 37 wird an einer Stelle des Umfangs des Deckels 18 von innen nach außen geführt.

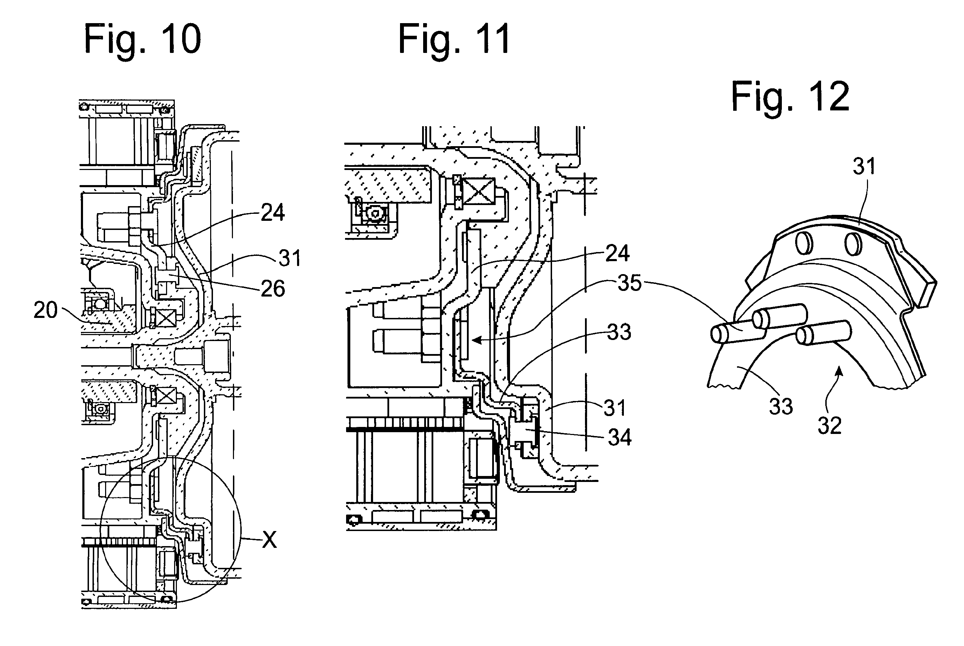

Die Figuren 10 bis 12 zeigen schließlich die Verbindung zwischen dem Rotorträger 24 und einem Gehäuseteil 31 des Anfahrelements 5, das der elektrischen Maschine 4 zugewandt ist. Die Verbindung wird über ein flexibles Verbindungsmittel 32 hergestellt, dessen Zentralbestandteil ein flexibles Verbindungsblech 32 ist. Dieses weist im Radialschnitt eine gebogene Form auf, die eine gewisse Elastizität zur Folge hat. Festgelegt ist das Blech 33 durch Nieten 34 am Gehäuseteil 31 und über Stehbolzen 35 am Rotorträger 24.

Statt einer starren Verbindung zwischen dem Rotorträger 24 und dem Gehäuseteil 31 wird also eine Verbindung mit einer gewissen Elastizität eingesetzt. Der Vorteil dieser Ausgestaltung liegt darin, dass radiale Zwangskräfte - resultierend aus einem Achsversatz zwischen der Rotorlagerung und der Lagerung des Anfahrelements (Getriebe) - nicht oder nur teilweise entstehen können. Die Höhe dieser Zwangskräfte hängt von der radialen Steifigkeit des Verbindungsblechs 33 ab und kann daher gemäß Vorgaben ausgelegt werden. Andere Komponenten (wie die Lager, der Rotor, das Wandlergehäuse usw.) werden dadurch nicht so stark radial belastet, so dass ein dadurch verursachtes Versagen verhindert wird bzw. auch eine höhere Bauteillebensdauer erreicht werden kann.

Als sehr vorteilhaft hat es sich bei der erläuterten Ausgestaltung eines Antriebsstranges gezeigt, dass keine starre, sondern eine mit Torsionsfederdämpfer versehene Kupplungsscheibe eingesetzt wird. Ferner ist es von Vorteil, dass eine elektrische Maschine mit Innenläufer zum Einsatz kommt. Schließlich ist auch die zuletzt diskutierte flexible Anbindung des Anfahrelements an der elektrischen Maschine vorteilhaft.

### Bezugszeichenliste

- 1: Antriebsstrang
- 2: Antriebsmotor (Brennkraftmaschine)
- 3: Kupplungsvorrichtung
- 4: elektrische Maschine (Antriebsmotor)
- 5: Anfahrelement (Getriebe)
- 6: Kupplungsscheibe
- 7: Federmittel
- 8: Schwungrad (mehrteilige Gegenreibfläche)
- 9: Anpressplatte
- 10: Betätigungsmittel
- 11: Wirkabschnitt des Federmittels
- 12: Druckplattengehäuse
- 12', 12": Teile des Druckplattengehäuses
- 1 3: erstes Lager
- 14: Ringkolben
- 15: Zylinder
- 16: Achse
- 17: Torsionsfederdämpfer
- 18: Deckel
- 19: zweites Lager
- 20: Trägerwelle
- 21: Statorträger
- 22: Stator
- 23: Befestigungsmittel (Stift)
- 24: Rotorträger
- 25: Rotor
- 26: Verbindungsmittel (Niet)
- 27: drittes Lager
- 28: Abtriebsteil (Kurbelwelle)
- 29: Wellenteil
- 30: viertes Lager
- 31: Gehäuseteil
- 32: flexibles Verbindungsmittel
- 33: Verbindungsblech (flexibel)
- 34: Niet
- 35: Stehbolzen
- 36: Kupplungsausrücklager
- 37: Hydraulikleitung
- 38: Fußteil
- 39: Verschiebesitz
- 40: Wickelkopf
- 41: Unterlegblech

## Patentansprüche

1. Antriebsstrang (1), insbesondere Antriebsstrang für ein Fahrzeug, der einen Antriebsmotor (2), eine Kupplungsvorrichtung (3), eine elektrische Maschine (4) und ein Anfahrelement (5) aufweist, wobei die Kupplungsvorrichtung (3) eine Kupplungsscheibe (6) aufweist, die mittels eines Federmittels (7) zwischen einem Schwungrad (8) und einer Anpressplatte (9) einspannbar ist, sowie ein Betätigungsmittel (10), mit dem ein auf die Anpressplatte (9) wirkender Wirkabschnitt (11) des Federmittels (7) axial beweglich ist, und wobei die Anpressplatte (9) zumindest teilweise von einem Druckplattengehäuse (12) umgeben ist,
**dadurch gekennzeichnet,**
**dass** zwischen dem Druckplattengehäuse (12) und dem Betätigungsmittel (10) ein erstes Lager (13) angeordnet ist.

2. Antriebsstrang nach Anspruch 1, **dadurch gekennzeichnet, dass** das erste Lager (13) sowohl radiale als auch axiale Kräfte übertragen kann.

3. Antriebsstrang nach Anspruch 1 oder 2, **dadurch gekennzeichnet, dass** das erste Lager (13) als Kugel- oder Wälzlager ausgebildet ist.

4. Antriebsstrang nach Anspruch 3, **dadurch gekennzeichnet, dass** das erste Lager (13) ein Rillenkugellager ist.

5. Antriebsstrang nach einem der Ansprüche 1 bis 4, **dadurch gekennzeichnet, dass** der Antriebsmotor (2) eine Brennkraftmaschine ist.

6. Antriebsstrang nach einem der Ansprüche 1 bis 5, **dadurch gekennzeichnet, dass** die elektrische Maschine (4) ein elektrischer Antriebsmotor ist.

7. Antriebsstrang nach einem der Ansprüche 1 bis 6, **dadurch gekennzeichnet, dass** das Anfahrelement (5) ein Getriebe ist.

8. Antriebsstrang nach einem der Ansprüche 1 bis 7, **dadurch gekennzeichnet, dass** das Betätigungsmittel (10) als hydraulischer Aktuator ausgebildet ist.

9. Antriebsstrang nach Anspruch 8, **dadurch gekennzeichnet, dass** das Betätigungsmittel (10) einen axial beweglichen Ringkolben (14) aufweist, der in einem ringförmigen Aufnahmeraum eines Zylinders (15) angeordnet ist, wobei der Ringkolben (14) und der Zylinder (15) konzentrisch zur Achse (16) des Antriebsstrangs (1) angeordnet sind.

10. Antriebsstrang nach einem der Ansprüche 1 bis 9, **dadurch gekennzeichnet, dass** die Kupplungsscheibe (6) mit einem Torsionsfederdämpfer (17) versehen ist.

11. Antriebsstrang nach einem der Ansprüche 1 bis 10, **dadurch gekennzeichnet, dass** die elektrische Maschine (4) einen der Kupplungsvorrichtung (3) zugewandten ortsfesten Deckel (18) aufweist, der über ein zweites Lager (19) eine zumindest die Kupplungsvorrichtung (3) und die elektrische Maschine (4) tragende Trägerwelle (20) lagert.

12. Antriebsstrang nach Anspruch 11, **dadurch gekennzeichnet, dass** im radial äußeren Bereich des Deckels (18) ein Statorträger (21) befestigt ist, an dem ein Stator (22) der elektrischen Maschine (4) angeordnet ist.

13. Antriebsstrang nach Anspruch 11 oder 12, **dadurch gekennzeichnet, dass** Befestigungsmittel (23) vorgesehen sind, mit denen eine drehfeste Verbindung zwischen zumindest einem Teil des Betätigungsmittels (10), insbesondere dessen Zylinder (15), und dem Deckel (18) hergestellt wird.

14. Antriebsstrang nach Anspruch 13, **dadurch gekennzeichnet, dass** die Befestigungsmittel (23) mindestens einen Stift aufweisen, der sich in Richtung der Achse (16) des Antriebsstranges (1) erstreckt.

15. Antriebsstrang nach einem der Ansprüche 1 bis 14, **dadurch gekennzeichnet, dass** die elektrische Maschine (4) einen Rotorträger (24) aufweist, an dem ein Rotor (25) angeordnet ist.

16. Antriebsstrang nach Anspruch 15, **dadurch gekennzeichnet, dass** der Rotorträger (24) mit der Trägerwelle (20) mittels eines Verbindungsmittels (26) verbunden ist.

17. Antriebsstrang nach Anspruch 16, **dadurch gekennzeichnet, dass** das Verbindungsmittel (26) eine Nietverbindung ist.

18. Antriebsstrang nach einem der Ansprüche 15 bis 17, **dadurch gekennzeichnet, dass** der Stator (22) radial weiter als der Rotor (25) von der Achse (16) des Antriebsstrangs (1) entfernt ist.

19. Antriebsstrang nach Anspruch 18, **dadurch gekennzeichnet, dass** der Stator (22) und der Rotor (25) konzentrisch zueinander angeordnet sind.

20. Antriebsstrang nach einem der Ansprüche 1 bis 19, **dadurch gekennzeichnet, dass** die Trägerwelle (20) mit einem als Loslager ausgebildeten dritten Lager (27) in einem Abtriebsteil (28) des Antriebsmotors (2), insbesondere in der Kurbelwelle der Brennkraftmaschine, gelagert ist.

21. Antriebsstrang nach einem der Ansprüche 1 bis 20, **dadurch gekennzeichnet, dass** ein das Anfahrelement (5) lagerndes Wellenteil (29) mit einem als Loslager ausgebildeten vierten Lager (30) gelagert ist.

22. Antriebsstrang nach Anspruch 20 oder 21, **dadurch gekennzeichnet, dass** das dritte Lager (27) und/oder das vierte Lager (30) als Nadellager ausgebildet ist.

23. Antriebsstrang nach einem der Ansprüche 15 bis 22, **dadurch gekennzeichnet, dass** das Anfahrelement (5) ein der elektrischen Maschine (4) zugewandtes Gehäuseteil (31) aufweist, das mit dem Rotorträger (24) über ein Verbindungsmittel (32) drehfest verbunden ist.

24. Antriebsstrang nach Anspruch 23, **dadurch gekennzeichnet, dass** das Verbindungsmittel (32) ein Verbindungsblech (33) umfasst, das im Radialschnitt eine gebogene Form aufweist.

25. Antriebsstrang nach Anspruch 24, **dadurch gekennzeichnet, dass** das Verbindungsblech (33) mit Nieten (34) mit dem Gehäuseteil (31) verbunden ist.

26. Antriebsstrang nach Anspruch 24 oder 25, **dadurch gekennzeichnet, dass** das Verbindungsblech (33) mit Stehbolzen (35) mit dem Rotorträger (24) verbunden ist.
